# EUROPÄISCHE PATENTSCHRIFT

(11) **EP 1 627 704 B1**
(45) Veröffentlichungstag und Bekanntmachung des Hinweises auf die Patenterteilung: **29.04.2009**
(21) Anmeldenummer: 05016530.7
(22) Anmeldetag: 29.07.2005
(51) Int. Cl.: B23D 47/04, B27B 5/065

(54) **Sägevorrichtung**
Sawing device
Dispositif de sciage

(30) Priorität: 18.08.2004 DE 102004040963
(43) Veröffentlichungstag der Anmeldung: 22.02.2006
(73) Patentinhaber: REICH SPEZIALMASCHINEN GmbH, 72622 Nürtingen (DE)
(72) Erfinder: Strasser, Rainer, 4571 Steyerling 239 (AT); Baumschlager, Otmar, 4572 St. Pankraz 24 (AT)
(74) Vertreter: Hoeger, Stellrecht & Partner Patentanwälte

(56) Entgegenhaltungen:
- EP-A- 1 362 657
- DE-A1- 3 607 454
- US-A- 4 879 931

## Beschreibung

Die Erfindung betrifft eine Sägevorrichtung zum Aufteilen plattenförmiger Werkstücke mit einem einen Auflagetisch aufweisenden Maschinengestell, an dem zumindest ein Sägeaggregat verfahrbar gelagert ist, und mit einem Druckbalken, der an zwei im Abstand zueinander am Maschinengestell angeordneten Druckbalkentürmen senkrecht zur Ebene des Auflagetisches verstellbar gelagert ist.

Insbesondere Holz- oder Kunststoffplatten können mittels derartiger Sägevorrichtungen aufgeteilt werden. Solche Sägevorrichtungen sind beispielsweise aus der EP 1 362 657 A1 bekannt. Die plattenförmigen Werkstücke werden hierzu auf dem Auflagetisch positioniert und können mittels des Druckbalkens relativ zum Auflagetisch festgelegt werden, so daß dann mit Hilfe des mindestens einen Sägeaggregates ein Sägeschnitt vorgenommen werden kann.

Die aufzuteilenden Werkstücke werden üblicherweise seitlich neben der Sägevorrichtung gestapelt und müssen stückweise mit vorgegebener Ausrichtung am Auflagetisch positioniert werden.

Aus der DE 36 07 454 A1 ist eine Aufteilanlage für plattenförmige Werkstücke bekannt, bei dem in einem Seitenbereich eines Auflagetisches ein Hebelarm vorgesehen ist, der in einer zum Auflagetisch parallelen Ebene um eine vertikale Achse schwenkbar ist. Am freien Ende des Hebelarmes ist ein Mitnehmer angeordnet, der durch eine Kolben-Zylinder-Einheit pneumatisch betätigt werden kann. Vom Mitnehmer kann ein Paket plattenförmiger Werkstücke positioniert werden.

Aufgabe der vorliegenden Erfindung ist es, eine Sägevorrichtung der eingangs genannten Art derart weiterzubilden, daß die Positionierung der aufzuteilenden Werkstücke am Auflagetisch vereinfacht ist.

Diese Aufgabe wird bei einer gattungsgemäßen Sägevorrichtung erfindungsgemäß dadurch gelöst, daß die Sägevorrichtung eine Positioniereinrichtung aufweist mit einer mit dem Maschinengestell verbundenen Stütze, die im Abstand zum Auflagetisch einen Schwenkarm trägt, der um eine senkrecht zur Ebene des Auflagetisches ausgerichtete Schwenkachse verschwenkbar ist, wobei mittels der Positioniereinrichtung ein aufzuteilendes Werkstück im Bereich des Auflagetisches positionierbar ist und wobei die Stütze an einem Druckbalkenturm gehalten ist.

Eine derartige Sägevorrichtung ermöglicht eine vereinfachte Handhabung der aufzuteilenden Werkstücke, da diese mittels der Positioniereinrichtung auf einfache Weise am Auflagetisch positioniert und ausgerichtet werden können. Die Positioniereinrichtung ist mit dem Maschinengestell verbunden. Dadurch können Kräfte, die auf die Positioniereinrichtung beim Positionieren eines Werkstückes einwirken, zumindest teilweise vom Maschinengestell aufgenommen werden,

Erfindungsgemäß ist die Stütze an einem Druckbalkenturm gehalten. Dies ermöglicht eine besonders platzsparende Anordnung der Positioniereinrichtung. Insbesondere bei einer derartigen Halterung der Stütze kann der vorzugsweise senkrecht zur Stütze ausgerichtete Schwenkarm eine Länge aufweisen, die kleiner ist als der Abstand der beiden Druckbalkentürme zueinander, ohne daß dies die Positionierung des aufzuteilenden Werkstückes beeinträchtigt. Dies hat den Vorteil, daß vom Schwenkarm relativ geringe Hebelkräfte auf die Stütze ausgeübt werden, so daß der Schwenkarm und die Stütze aufgrund der geringeren erforderlichen mechanischen Stabilität kostengünstig herstellbar sind. Ist die Stütze an einem der Druckbalkentürme oder an einem Ständer des Maschinengestells gehalten, so kann ein separates Fußgestell für die Positioniereinrichtung entfallen.

Günstig ist es, wenn der Schwenkarm um mindestens 90°, insbesondere zumindest um 180° schwenkbar ist. Vorzugsweise ist der Schwenkarm um mehr als 235° schwenkbar. Dies gibt die Möglichkeit, einen Stapel aufzuteilender Werkstücke seitlich neben oder hinter dem Maschinengestell zu lagern, wobei die Werkstücke mittels der Positioniereinrichtung nacheinander am Auflagetisch positioniert werden können zur Vornahme eines Sägeschnittes,

Von besonderem Vorteil ist es, wenn die Stütze wahlweise an jedem der beiden Druckbalkentürme festlegbar ist. Dies gibt die Möglichkeit, die Sägevorrichtung an unterschiedlichen Orten einzusetzen, wobei je nach vorherrschenden Platzverhältnissen die Stütze am jeweils günstigsten Druckbalkenturm festgelegt werden kann.

Vorzugsweise ist die Stütze mit mindestens einem Druckbalkenturm lösbar verbindbar. Es kann beispielsweise vorgesehen sein, daß die Stütze mit zumindest einem Druckbalkenturm verschraubbar ist. Alternativ und/oder ergänzend kann mindestens ein Druckbalkenturm eine Aufnahme oder Halterung aufweisen, in die die Stütze einsetzbar ist oder auf die die Stütze aufsetzbar ist,

Bei einer besonders bevorzugten Ausführungsform ist die Stütze oberhalb eines Druckbalkenturmes angeordnet. Bei einer derartigen Ausführungsform bildet die Stütze eine Verlängerung des Druckbalkenturmes. Dies ermöglicht eine besonders platzsparende Anordnung der Positioniereinrichtung.

Es kann vorgesehen sein, daß die Stütze starr mit dem Schwenkarm verbunden und um die Schwenkachse verdrehbar an einem Druckbalkenturm gelagert ist.

Vorteilhafterweise ist die Stütze unverdrehbar an einem Druckbalkenturm gehalten und der Schwenkarm ist um die Schwenkachse verschwenkbar an der Stütze gelagert. Die Stütze kann hierzu zwei im Abstand zueinander angeordnete Lagerböcke umfassen, an denen der Schwenkarm gelagert ist.

Bei einer kostengünstig herstellbaren Ausführungsform ist der Schwenkarm manuell schwenkbar. Alternativ kann vorgesehen sein, daß der Schwenkarm mittels einer Antriebseinheit schwenkbar ist, beispielsweise mit Hilfe eines Elektromotors oder einer pneumatischen Antriebseinrichtung.

Bei einer bevorzugten Ausführungsform ist am Schwenkarm eine Hubeinheit zum Anheben und Absenken eines Werkstückes gehalten. Von Vorteil ist es, wenn die Hubeinheit in Längsrichtung des Schwenkarms verschiebbar gelagert ist. Es kann vorgesehen sein, daß die Hubeinheit manuell betätigbar ist, beispielsweise mittels eines Kettentriebes. Günstig ist es jedoch, wenn die Hubeinheit motorisch, vorzugsweise elektromotorisch, antreibbar ist.

Eine besonders einfache Handhabung der Werkstücke kann dadurch erzielt werden, daß die Hubeinheit mit einem Greifer zum Erfassen eines aufzuteilen-den Werkstückes zusammenwirkt. Der Greifer kann hierbei zangenartig ausgebildet sein, so daß mittels des Greifers ein Werkstück in vertikaler Ausrichtung erfaßt werden kann. Alternativ kann vorgesehen sein, daß der Greifer zumindest einen mit Unterdruck beaufschlagbaren Saugkopf umfaßt, der auf das aufzuteilende Werkstück aufsetzbar ist, so daß dieses in horizontaler Ausrichtung angehoben werden kann.

Die nachfolgende Beschreibung einer bevorzugten Ausführungsform der Erfindung dient im Zusammenhang mit der Zeichnung der näheren Erläuterung. Es zeigen:

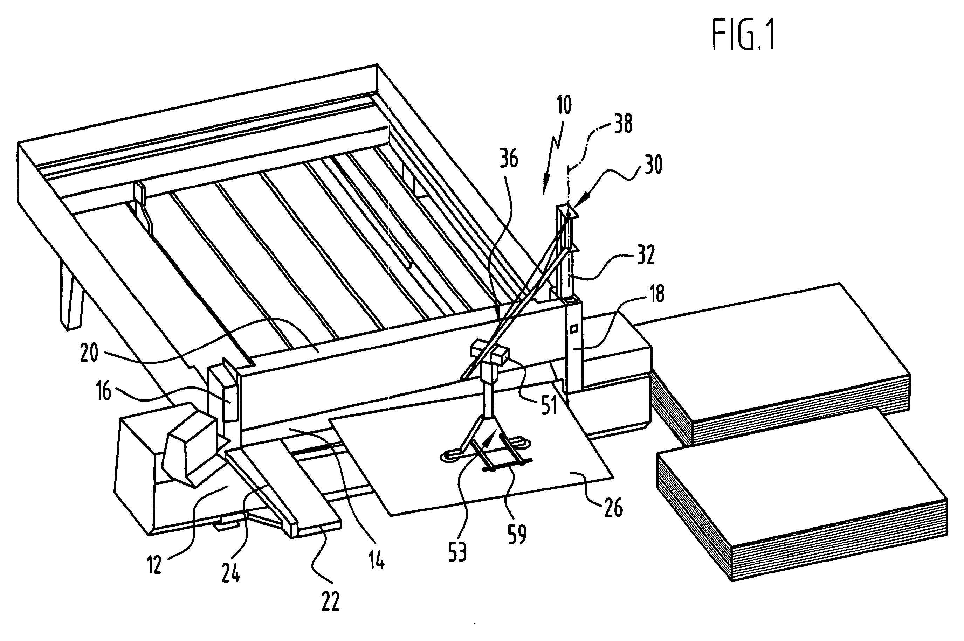

- Fig. 1:: eine perspektivische Darstellung einer erfindungsgemäßen Sägevorrichtung und
- Fig. 2:: eine perspektivische Darstellung nach Art einer Explosionszeichnung einer Positioniereinrichtung der Sägevorrichtung.

In der Zeichnung ist eine erfindungsgemäße Sägevorrichtung schematisch dargestellt, die insgesamt mit dem Bezugszeichen 10 belegt ist. Sie umfaßt ein Maschinengestell 12, das einen Auflagetisch 14 ausbildet. Unterhalb des Auflagetisches ist ein in der Zeichnung nicht dargestelltes, an sich bekanntes Sägeaggregat entlang einer Sägelinie linear verfahrbar gehalten, wobei ein Sägeblatt des Sägeaggregates einen Sägespalt (nicht dargestellt) des Auflagetisches 14 durchgreift, so daß ein auf dem Auflagetisch 14 positioniertes Werkstück mittels des Sägeblattes durchtrennt werden kann.

An einander gegenüberliegenden Stirnseiten trägt das Maschinengestell 12 jeweils einen Druckbalkenturm 16, 18. Jeder der beiden Druckbalkentürme 16, 18 nimmt eine dem Fachmann bekannte und deshalb zur Erzielung einer besseren Übersicht in der Zeichnung nicht dargestellte Führungseinrichtung auf. An den Führungseinrichtungen ist in bekannter Weise ein von einer Haube 20 U-förmig umgebener Druckbalken in zur Ebene des Auflagetisches 14 senkrechter Richtung verstellbar gehalten. Der aus der Zeichnung nicht ersichtliche Druckbalken weist in üblicher Weise ein ungefähr C-förmiges Profil auf mit einer dem voranstehend genannten Sägespalt zugewandten schlitzförmigen Öffnung, in die beim Auftrennen eines Werkstücks das Sägeblatt eintreten kann.

Vom Maschinengestell 12 steht seitlich eine Stützplatte 22 ab, die ein Anschlagelement 24 trägt zum Ausrichten eines aufzuteilenden Werkstückes 26.

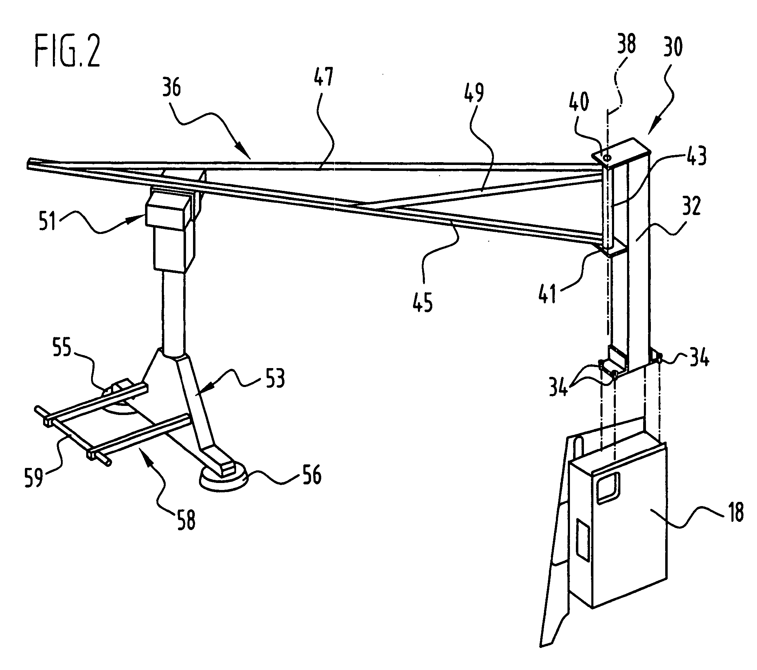

Die Sägevorrichtung 10 umfaßt außerdem eine Positioniereinrichtung 30 mit einer senkrecht zur Ebene des Auflagetisches 14 ausgerichteten Stütze 32, die auf dem Druckbalkenturm 18 aufsitzt und mit diesem mit Hilfe von vier Schrauben 34 verschraubt ist. Dies wird aus Figur 2 deutlich. Über den Druckbalken 18 ist die Stütze 32 starr mit dem Maschinengestell 12 verbunden.

Im Abstand zum Druckbalkenturm 18 ist an der Stütze 32 ein Schwenkarm 36 gelagert, der um eine parallel zur Längsachse der Stütze 32 ausgerichtete Schwenkachse 38 verschwenkbar ist. Die Lagerung des Schwenkarmes 36 an der Stütze 32 erfolgt mittels zweier im Abstand zueinander angeordneter Lagerböcke 40, 41, die eine koaxial zur Schwenkachse 38 ausgerichtete Haltestrebe 43 zwischen sich aufnehmen. Ein senkrecht zur Schwenkachse 38 ausgerichteter Träger 45 des Schwenkarms 36 ist mit einem Ende dem zweiten Lagerbock 41 unmittelbar benachbart an der Haltestrebe 43 festgelegt, während das freie Ende des Trägers 45 über eine Traverse 47 dem ersten Lagerbock 40 unmittelbar benachbart an der Haltestrebe 43 gehalten ist. Ungefähr in Längsrichtung mittig ist der Träger 45 zusätzlich über einen Steg 49 starr mit der Haltestrebe 43 verbunden.

Am Träger 45 ist in dessen Längsrichtung verschiebbar eine Hubeinheit 51 gelagert, an der ein Vakuumgreifer 53 gehalten ist, der mittels der Hubeinheit angehoben und abgesenkt werden kann. Der Vakuumgreifer umfaßt zwei Saugköpfe 55, 56, die über eine in der Zeichnung nicht dargestellte, an sich bekannte Saugleitung mit einer Vakuumpumpe in Strömungsverbindung stehen. Außerdem umfaßt der Vakuumgreifer 53 einen Haltebügel 58 mit einem Handgriff 59.

Plattenförmige Werkstücke, beispielsweise Holz- oder Kunststoffplatten, können seitlich neben der Sägevorrichtung 10 gestapelt werden. Zum Aufteilen eines Werkstückes kann der Schwenkarm 36 verschwenkt werden, so daß der Vakuumgreifer 53 mittels der Hubeinheit 51 ungefähr in der Mitte des Werkstückes 26 auf dieses abgesenkt werden kann, wobei die Saugköpfe 55, 56 flächig am Werkstück 26 anliegen. Die Saugköpfe 55, 56 können anschließend mit Unterdruck beaufschlagt werden, so daß das Werkstück 26 am Vakuumgreifer 53 festgesaugt wird. Der Vakuumgreifer 53 kann dann von der Hubeinheit 51 angehoben und der Schwenkarm kann anschließend so weit verschwenkt werden, daß das aufzuteilende Werkstück 26 im Bereich des Anschlagelementes 24 und des Auflagetisches 14 positioniert werden kann zur Vornahme eines Sägeschnittes. Kräfte, die beim Positionieren eines Werkstückes auf die Positioniereinrichtung 30 einwirken, können vom Maschinengestell 12 aufgenommen werden, mit dem die Positioniereinrichtung 30 verbunden ist, und da die Positioniereinrichtung 30 unmittelbar am Druckbalkenturm 18 gehalten ist, ergibt sich insgesamt für die Sägevorrichtung 10 eine platzsparende Ausgestaltung, wobei ein separates Fußgestell für die Positioniereinrichtung 30 entfallen kann. Die Sägevorrichtung 10 zeichnet sich somit durch eine verhältnismäßig geringe Baugröße aus und ermöglicht eine einfache Handhabung der aufzuteilenden Werkstücke.

## Patentansprüche

1. Sägevorrichtung zum Aufteilen plattenförmiger Werkstücke (26) mit einem einen Auflagetisch (14) aufweisenden Maschinengestell (12), an dem zumindest ein Sägeaggregat verfahrbar gelagert ist, und mit einem Druckbalken, der an zwei im Abstand zueinander am Maschinengestell (12) angeordneten Druckbalkentürmen (16, 18) senkrecht zur Ebene des Auflagetisches (14) verstellbar gelagert ist, **dadurch gekennzeichnet, daß** die Sägevorrichtung (10) eine Positioniereinrichtung (30) aufweist mit einer mit dem Maschinengestell (12) verbundenen Stütze (32), die im Abstand zum Auflagetisch (14) einen Schwenkarm (36) trägt, der um eine senkrecht zur Ebene des Auflagetisches (14) ausgerichtete Schwenkachse (38) schwenkbar ist, wobei mittels der Positioniereinrichtung (30) ein aufzuteilendes Werkstück (26) im Bereich des Auflagetisches (14) positionierbar ist und wobei die Stütze (32) an einem Druckbalkenturm (18) gehalten ist.

2. Sägevorrichtung nach Anspruch 1, **dadurch gekennzeichnet, daß** der Schwenkarm (36) um mindestens 90° schwenkbar ist.

3. Sägevorrichtung nach Anspruch 1 oder 2, **dadurch gekennzeichnet, daß** die Stütze (32) wahlweise an jedem der beiden Druckbalkentürme (16, 18) festlegbar ist.

4. Sägevorrichtung nach einem der voranstehenden Ansprüche, **dadurch gekennzeichnet, daß** die Stütze (32) mit zumindest einem Druckbalkenturm (18) lösbar verbindbar ist.

5. Sägevorrichtung nach Anspruch 4, **dadurch gekennzeichnet, daß** die Stütze (32) mit zumindest einem Druckbalkenturm (18) verschraubbar ist.

6. Sägevorrichtung nach einem der voranstehenden Ansprüche, **dadurch gekennzeichnet, daß** die Stütze (32) oberhalb eines Druckbalkenturms (18) angeordnet ist.

7. Sägevorrichtung nach einem der voranstehenden Ansprüche, **dadurch gekennzeichnet, daß** die Stütze (32) unverdrehbar gehalten ist und daß der Schwenkarm (36) um die Schwenkachse (38) verschwenkbar an der Stütze (32) gelagert ist.

8. Sägevorrichtung nach einem der voranstehenden Ansprüche, **dadurch gekennzeichnet, daß** der Schwenkarm (36) manuell verschwenkbar ist.

9. Sägevorrichtung nach einem der voranstehenden Ansprüche, **dadurch gekennzeichnet, daß** am Schwenkarm (36) eine Hubeinheit (51) zum Anheben und Absenken eines Werkstückes (26) gehalten ist.

10. Sägevorrichtung nach Anspruch 9, **dadurch gekennzeichnet, daß** die Hubeinheit (51) motorisch antreibbar ist.

11. Sägevorrichtung nach Anspruch 9 oder 10, **dadurch gekennzeichnet, daß** die Hubeinheit (51) mit einem Greifer (53) zum Erfassen des Werkstückes (26) zusammenwirkt.

## Claims

1. Sawing device for dividing plate-shaped workpieces (26), having a machine frame (12) which comprises a support table (14) and on which at least one sawing unit is movably supported, and having a pressure beam which is supported to be adjustable perpendicularly to the plane of the support table (14) on two pressure beam towers (16, 18) arranged at a distance from each other on the machine frame (12), **characterised in that** the sawing device (10) has a positioning device (30) having a stanchion (32) which is connected to the machine frame (12) and which carries, at a distance from the support table (14), a pivoting arm (36) which is pivotable about a pivot axis (38) oriented perpendicularly to the plane of the support table (14), a workpiece (26) to be divided being positionable in the region of the support table (14) by the positioning device (30), and the stanchion (32) being held on a pressure beam tower (18).

2. Sawing device according to claim 1, **characterised in that** the pivoting arm (36) is pivotable through at least 90°.

3. Sawing device according to claim 1 or 2, **characterised in that** the stanchion (32) can be secured to either of the two pressure beam towers (16, 18).

4. Sawing device according to any one of the preceding claims, **characterised in that** the stanchion (32) can be releasably connected to at least one pressure beam tower (18).

5. Sawing device according to claim 4, **characterised in that** the stanchion (32) can be screwed to at least one pressure beam tower (18).

6. Sawing device according to any one of the preceding claims, **characterised in that** the stanchion (32) is arranged above a pressure beam tower (18).

7. Sawing device according to any one of the preceding claims, **characterised in that** the stanchion (32) is held in such a manner that it cannot be twisted and **in that** the pivoting arm (36) is supported on the stanchion (32) to be pivotable about the pivot axis (38).

8. Sawing device according to any one of the preceding claims, **characterised in that** the pivoting arm (36) is manually pivotable.

9. Sawing device according to any one of the preceding claims, **characterised in that** a lifting unit (51) for lifting and lowering a workpiece (26) is held on the pivoting arm (36).

10. Sawing device according to claim 9, **characterised in that** the lifting unit (51) can be driven by a motor.

11. Sawing device according to claim 9 or 10, **characterised in that** the lifting unit (51) cooperates with a gripper (53) for grasping the workpiece (26).

## Revendications

1. Dispositif de sciage destiné à diviser des pièces (26) en forme de plaques, ledit dispositif de sciage comprenant un bâti de machine (12), qui comporte une table porte-pièce (14) et sur lequel au moins une unité de sciage peut être montée de façon déplaçable, et une barre de pression qui est montée sur deux colonnes de barre de pression (16, 18), disposées à distance l'une de l'autre sur le bâti de machine (12), de façon à pouvoir se déplacer perpendiculairement au plan de la table porte-pièce (14), **caractérisé en ce que** le dispositif de sciage (10) comporte un mécanisme de positionnement (30) qui possède un support (32) relié au bâti de machine (12) et supportant à distance de la table porte-pièce (14) un bras pivotant (36) qui est apte à pivoter autour d'un axe de pivotement (38) orienté perpendiculairement au plan de la table porte-pièce (14), une pièce à diviser (26) pouvant être positionnée dans la région de la table porte-pièce (14) au moyen du mécanisme de positionnement (30) et le support (32) étant maintenu sur une colonne de barre de pression (18).

2. Dispositif de sciage selon la revendication 1, **caractérisé en ce que** le bras pivotant (36) est apte à pivoter sur au moins 90°.

3. Dispositif de sciage selon la revendication 1 ou 2, **caractérisé en ce que** le support (32) peut être fixé au choix sur l'une ou l'autre des deux colonnes de barre de pression (16, 18).

4. Dispositif de sciage selon l'une des revendications précédentes, **caractérisé en ce que** le support (32) peut être relié de façon amovible à au moins une colonne de barre de pression (18).

5. Dispositif de sciage selon la revendication 4, **caractérisé en ce que** le support (32) peut être vissé à au moins une colonne de barre de pression (18).

6. Dispositif de sciage selon l'une des revendications précédentes, **caractérisé en ce que** le support (32) est disposé au-dessus d'une colonne de barre de pression (18).

7. Dispositif de sciage selon l'une des revendications précédentes, **caractérisé en ce que** le support (32) est maintenu immobile en rotation, et **en ce que** le bras pivotant (36) est monté sur le support (32) de façon à pouvoir pivoter autour de l'axe de pivotement (38).

8. Dispositif de sciage selon l'une des revendications précédentes, **caractérisé en ce que** l'on peut faire pivoter le bras pivotant (36) manuellement.

9. Dispositif de sciage selon l'une des revendications précédentes, **caractérisé en ce qu'**une unité de levage (51), destinée à lever et abaisser une pièce (26), est maintenue sur le bras pivotant (36).

10. Dispositif de sciage selon la revendication 9, **caractérisé en ce que** l'unité de levage (51) peut être entraînée par un moteur.

11. Dispositif de sciage selon la revendication 9 ou 10, **caractérisé en ce que** l'unité de levage (51) coopère avec un dispositif de préhension (53) destiné à saisir la pièce (26).
